# EUROPEAN PATENT SPECIFICATION

(11) **EP 2 243 865 B1**
(45) Date of publication and mention of the grant of the patent: **15.08.2018**
(21) Application number: 09704900.1
(22) Date of filing: 06.01.2009
(51) Int. Cl.: C23C 30/00, C22C 19/05, C22C 38/00, C22C 38/02, C22C 38/60, B32B 15/01, C22C 38/08

(54) **GRAIN-ORIENTED ELECTROMAGNETIC STEEL SHEET EXCELLENT IN MAGNETIC CHARACTERISTICS**
KORNORIENTIERTES ELEKTROMAGNETISCHES STAHLBLECH MIT HERVORRAGENDEN MAGNETISCHEN EIGENSCHAFTEN
TÔLE D'ACIER ÉLECTROMAGNÉTIQUE À GRAINS ORIENTÉS AYANT D'EXCELLENTES CARACTÉRISTIQUES MAGNÉTIQUES

(30) Priority: 24.01.2008 JP 2008013853
(43) Date of publication of application: 27.10.2010
(73) Proprietor: Nippon Steel & Sumitomo Metal Corporation, Tokyo 100-8071 (JP)
(72) Inventor: USHIGAMI, Yoshiyuki, Tokyo 100-8071 (JP); HIRANO, Shigeru, Tokyo 100-8071 (JP); FUJII, Hiroyasu, Tokyo 100-8071 (JP); ARITA, Yoshihiro, Tokyo 100-8071 (JP); YAMAGUCHI, Toshinao, Fukuoka-shi Fukuoka 811-0295 (JP); KOIKE, Isao, Fukuoka-shi Fukuoka 811-0295 (JP)
(74) Representative: Vossius & Partner Patentanwälte Rechtsanwälte mbB
(86) International application number: PCT/JP2009/050263
(87) International publication number: WO 2009/093492

(56) References cited:
- JP-A- 7 173 641
- JP-A- 7 173 641
- JP-A- 11 131 251
- JP-A- 11 131 251
- JP-A- 2005 240 157
- US-A- 5 415 703
- US-A- 5 714 017
- SPIEKERMANN P: "Alloys - a special problem of patent law", NONPUBLISHED ENGLISH TRANSLATION OF DOCUMENT, 31 December 1993 (1993-12-31), pages 1-20, XP002184689,

## Description

The present invention relates to grain-oriented electrical steel sheets used as a soft magnetic material for cores of transformers and other electrical equipment. In particular, it relates to grain-oriented electrical steel sheets improved in magnetic properties by forming a Ni-Fe alloy film on the surface of the steel sheet.

A grain-oriented electrical steel sheet is a steel sheet containing Si in 7% or less and is comprised of {110}<001> oriented crystal grains. This steel sheet is mainly used as a core for transformers and other electrical equipment, in case good magnetic properties are demanded. In particular, a low energy loss, that is, iron loss, is important. Due to the environmental issues and energy issues of recent years, a demand has been growing for grain-oriented electrical steel sheets with low iron loss.

Various attempts have been made up to now to reduce the iron loss of grain-oriented electrical steel sheets. Up until now, the following methods have been proposed: (1) a method of sharpening the {110}<001> orientation and reducing the hysteresis loss, (2) a method of reducing inclusions and internal strain in the steel sheet to reduce hysteresis loss, (3) a method of flattening the steel sheet surface to reduce the hysteresis loss, (4) a method of increasing the amount of Si in the steel sheet and raising the specific resistance to reduce the eddy current loss, and (5) a method of reducing the sheet thickness to reduce the eddy current loss.

Further, apart from the above methods of improving the iron loss of the steel sheet itself, a method of physically controlling the magnetic domain structure to reduce the iron loss has also been proposed.

For example, Japanese Patent Publication (A) No. 53-137016, Japanese Patent Publication (A) No. 55-18566, and Japanese Patent Publication (A) No. 57-188810 disclose methods of reducing the iron loss by controlling the magnetic domains by introducing linear strain by scratching by a ball pen, scratching by laser, and scratching by electrodischarge machining. However, these methods of control of the magnetic domain structure cannot be applied to a material for a wound core which is annealed after core formation.

For this reason, as a method of control of the magnetic domains enabling application of the material for a wound core, the method of introducing linear grooves or fine grains to control the magnetic domains and reduce the iron loss has been proposed in Japanese Patent Publication (A) No. 59-197520, Japanese Patent Publication (A) No. 61-117218, and Japanese Patent Publication (A) No. 62-179105. However, with this method, due to the presence of the grooves or fine grains, the magnetic flux density (B8) of the product ends up greatly falling to 0.02 to 0.06T.

Therefore, the object of the present invention is to provide a low iron loss grain-oriented electrical steel sheet which is applied to wound cores, with the magnetic domain control, which does not lose its effect after annealing and does not greatly deteriorate the magnetic flux density.

The present invention comes up with the new idea of forming a Ni-Fe alloy film on a grain-oriented electrical steel sheet and thereby solves the above problems. The gist is as follows:
(1) Grain-oriented electrical steel sheet excellent in magnetic properties having mainly {110}<001> orientation texture characterized in that the steel contains Si in 0.8 to 7 mass%, optionally one or more of Mn: 1% or less, Cr: 0.3% or less, Cu: 0.4% or less, P: 0.5% or less, Ni: 1% or less, Mo: 0.1% or less, Sn: 0.3% or less, and Sb: 0.3% or less, further optionally C, N, S, Se, Ti and Al, the contents of these elements being 0.005% or less, and a balance of Fe and unavoidable impurities, and that at least one surface of the steel sheet is formed from a Ni-Fe alloy film consisting of a composition of Fe: 10 to 30 mass% and Ni: 90 to 70 mass%, and wherein the thickness of the Ni-Fe alloy film is 0.1 to 0.6 µm; wherein
   at least one surface of the steel
   sheet is formed from a tension coating on the surface of the Ni-Fe alloy film and in that the roughness of the interface between the Ni-Fe alloy film and the tension coating is not more than the roughness of the interface between the Ni-Fe alloy film and the base iron.
(2) Grain-oriented electrical steel sheet excellent in magnetic properties as set forth in the above (1), characterized in that the surface of the Ni-Fe alloy film is formed from a 0.1 to 1 kg/mm² tension coating.
(3) Grain-oriented electrical steel sheet excellent in magnetic properties as set forth in the above (1) or (2), characterized in that a ratio B8/Bs of magnetic flux density B8 of the steel sheet and saturated magnetic flux density Bs of the steel sheet is 0.93 or more.

According to the above present invention, it is possible to solve the above problems and easily obtain a grain-oriented electrical steel sheet excellent in magnetic properties with low iron loss and high magnetic flux density and to provide a grain-oriented electrical steel sheet meeting recent demands for environmental protection and energy saving.
FIG. 1 is a view showing the effect of the thickness of the Ni-Fe alloy film and the tension on the magnetic domain width of the grain-oriented electrical steel strip.
FIG. 2 is a view showing the effect of an excitation frequency f and the thickness of the Ni-Fe alloy film on the iron loss of the grain-oriented electrical steel strip.
FIG. 3 is a view showing the effect of a maximum excitation magnetic flux density (frequency: 50Hz) and the Ni-Fe alloy film on the iron loss of the grain-oriented electrical steel strip.

The inventors engaged in detailed studies of the factors affecting the magnetic domain structure of the steel sheet containing Si in 0.8 to 7 mass% and having a mainly (110}<001> orientation texture and of methods of control of the same, found that (a) the
magnetic domain widths become larger the higher the {110}<001> orientation and the thinner the sheet and that (b) the magnetic domains can be subdivided by coating a Ni-Fe alloy film on the surface of the steel sheet (below, sometimes abbreviated as "magnetic coating") and thereby completed the present invention.

Below, they will explain the experiments by which these findings were obtained. Note that in the following explanation, the content of elements is expressed in mass%.

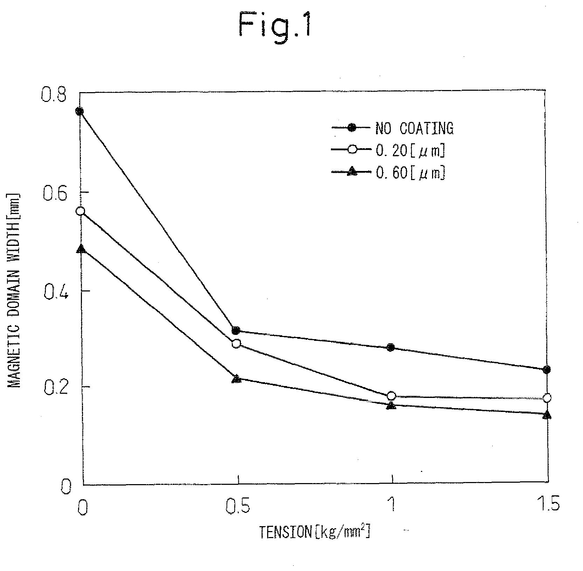

First, the inventors coated one surface of a 0.07 mm thick grain-oriented electrical steel sheet containing Si in 3% and having {110}<001> oriented grains with a Fe-78%Ni alloy film to a 0.2 and 0.6 µm thickness by using the sputtering method, further gave a tension coating over that, and investigated the effects of these coatings on the magnetic domain width. FIG. 1 shows the results of measurement of the magnetic domain widths in the case of changing the thickness of the Ni-Fe alloy film and the tension.

As clear from FIG. 1, it was found that compared with the magnetic domain width of a grain-oriented electrical steel sheet without a magnetic coating, the magnetic domain width is gradually subdivided by coating a Ni-Fe alloy film. Further, it was found that by using a tension coating to impart tension to the steel sheet, the magnetic domain width is further subdivided.

Further, when forming a Ni-rich Ni-Fe alloy film, it became for the first time clear that the Ni-Fe alloy film had the effect of subdividing the magnetic domains and reducing the iron loss even when not applying the tension coating to the steel sheet. Therefore, it was clarified that the mechanism of subdivision of the magnetic domains of the Ni-rich Ni-Fe alloy film differs from subdivision of the magnetic domains by imparting the tension.

Further, the iron loss reducing effect due to the tension becomes substantially saturated in the region of a tension of over 1 kg/mm².

Next, the inventors used the same grain-oriented electrical steel sheet as a sample, coated this steel sheet with an Fe-78%Ni alloy film on one surface to a thickness of 0.1 to 0.6 µm, imparted a tension of 1.0 kg/m², and measured the effects of the Ni-Fe alloy film on the magnetic properties in that state.

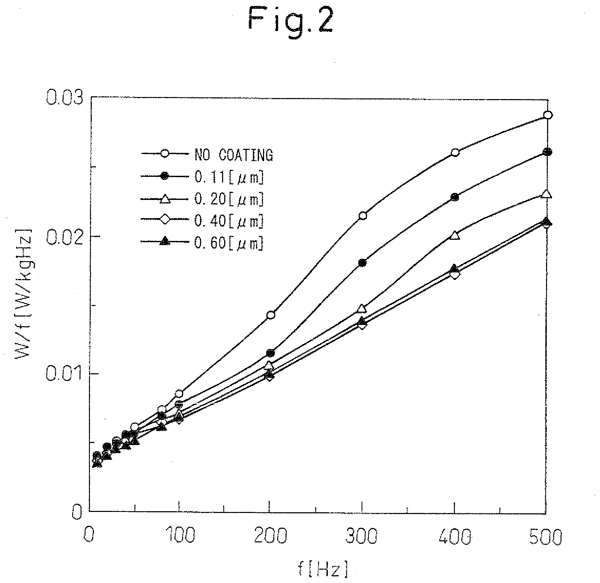

FIG. 2 shows the results of the measurement of the iron loss per cycle W/f of a sample when changing the excitation frequency f. As clear from FIG. 2, as the thickness of the magnetic coating is gradually increased from 0.11 to 0.60 µm, the iron loss decreases. By applying a magnetic coating of a Ni-Fe alloy film, it could be confirmed that the iron loss is reduced in the total region of the frequency range of 50 to 500Hz. In this case, with a coating thickness of 0.6 µm or more, the iron loss reducing effect became substantially saturated.

The inventors measured the magnetic flux density (B8) of these samples, whereupon they found the magnetic coating did not greatly reduce the magnetic flux density.

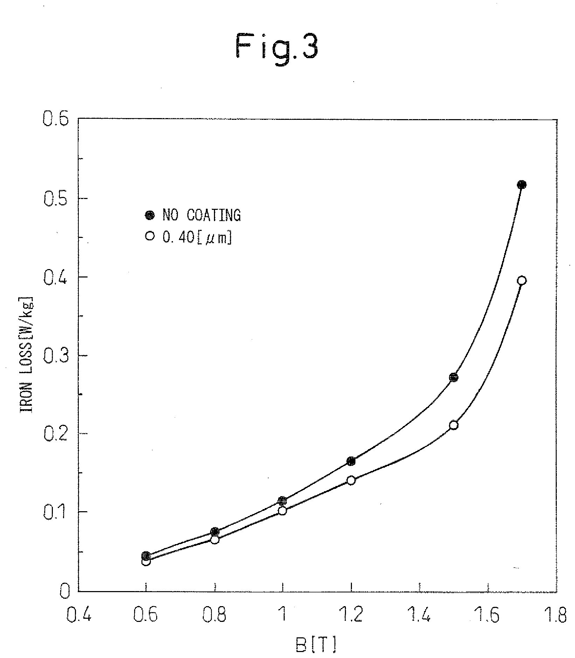

Further, FIG. 3 shows the results of the measurement of the iron loss of a sample with no magnetic coating and a sample with the magnetic coating formed by the Ni-Fe alloy film of 0.4 µm thickness in the case of a frequency of 50Hz when the maximum magnetic flux density changed from 0.6 to 1.7T. From FIG. 3, it was found that the iron loss is reduced by the magnetic coating at all excitation magnetic flux densities.

Due to the above results, the inventors found that by forming an Ni-Fe alloy film on the surface of grain-oriented electrical steel sheet having a mainly {110}<001> orientation texture, it is possible to subdivide the magnetic domains of the steel sheet to thereby reduce the iron loss.

The mechanism of improvement of the magnetic properties by the Ni-Fe alloy film has not been completely elucidated, but the inventors believe it to be as follows:
The magnetic domain structure of a {110}<001> orientation grain-oriented electrical steel sheet is basically comprised of 180° magnetic domains arranged in slab shapes in the rolling direction. The width of these 180° magnetic domains has a major effect on the magnetic properties. This magnetic domain width is determined by the magnetostatic energy caused by the surface magnetic poles arising due to the angle of inclination of the <001> axis from the surface and magnetic wall energy. When the surface is coated by Fe-78%Ni or other soft magnetic film, it is believed that the magnetostatic energy due to the surface magnetic poles will change and therefore the width of the 180° magnetic domains will change, and thus the magnetic properties will be improved.

The present invention based on the above discoveries will be explained below.

In the present invention, the grain-oriented electrical steel sheet used as the base material on which the Ni-Fe alloy film is formed is not particularly limited. Existing grain-oriented electrical steel sheets, steel strips, etc. containing Si in a range of up to 7% and having a texture having a mainly {110}<001> orientation can be utilized.
For example, a steel sheet or a steel strip produced by the known methods (for example, see Japanese Patent Publication (B2) No. 30-3651, Japanese Patent Publication (B2) No. 40-15644, Japanese Patent Publication (B2) No. 51-13469, and Japanese Patent Publication (B2) No. 62-45285) and a steel foil produced by the known method (for example, see Japanese Patent Publication (A) No. 2-277748) may be used.

The grain-oriented electrical steel sheet generally has a glass film on its surface, so the glass film is removed by pickling etc., then the surface of the steel sheet is coated with a Ni-Fe alloy film. Further, if using a steel sheet produced by the methods of production of a grain-oriented electrical steel sheet not allowing the formation of a glass film on the surface of the sheet (for example, see Japanese Patent Publication (A) No. 7-118750 and Japanese Patent Publication (A) No. 2003-268450), it is possible to eliminate the process of removing the glass film.

The Ni-Fe alloy film is consisting of Fe: 10 to 30% and Ni: 90 to 70%, preferably Fe: 15 to 30% and Ni: 85 to 70%. By forming this range of ratio of composition of Ni-Fe alloy film, the iron loss is reduced.

The method of forming the Ni-Fe alloy film is not particularly limited. Any method may be used such as PVD, CVD, or other dry coating, plating or other wet coating, coating a material, then firing it by annealing, etc.

The coating thickness of the Ni-Fe alloy film has to be 0.1 µm or more in order to obtain the iron loss reducing effect. Even if formed over 0.6 µm, the iron loss reducing effect ends up becoming saturated.

The surface on which the Ni-Fe alloy film is coated may be both surfaces or either surface of the steel sheet, but coating of one surface is preferable from the viewpoint of improvement of the magnetic properties.

When the surface of the Ni-Fe alloy film after coating is rough, the iron loss reducing effect is impaired. Therefore, the surface roughness of the Ni-Fe alloy film is preferably made a roughness of about the same extent or lower than the roughness of the surface of the steel sheet after removal of the glass film.

The present invention subdivides the magnetic domain widths of the grain-oriented electrical steel sheet and thereby improves the iron loss, so becomes more effective when it is applied to the material with wider magnetic domains, for example, the material of sharper {110}<001> orientation and the material of thinner thickness.

Therefore, when applying this invention to a material having an indicator of the {110}<001> orientation of the B8/Bs (B8: magnetic flux density when applying magnetic field of 800A/m, Bs: saturated magnetic flux density with ingredients of material) of 0.93 or more, preferably 0.95 or more, the effect of improvement of the iron loss becomes larger.

After forming the Ni-Fe alloy film, an insulation coating is applied. At this time, if forming a tension coating such as disclosed in Japanese Patent Publication (A) No. 53-28375 (tension imparting type insulation coating), the effect of improvement of the iron loss becomes larger.

To obtain the iron loss reducing effect by tension coating, 0.1 kg/mm² or more, preferably 0.5 kg/mm² or more tension is required. With tension over 1 kg/mm², the iron loss reducing effect is substantially saturated.

In the present invention, for the grain-oriented electrical steel sheet used as base material on which the Ni-Fe alloy film is formed, any existing one may be used as mentioned above. The grain-oriented electrical steel sheet regarding the steel composition, is a steel which is based on steel containing Si in 0.8 to 7% and having a balance of Fe and unavoidable impurities and which, in accordance with need, optionally contains one or more of Mn: 1% or less, Cr: 0.3% or less, Cu: 0.4% or less, P: 0.5% or less, N: 1% or less, Mo: 0.1% or less, Sn: 0.3% or less, and Sb: 0.3% or less.

Note that, C, N, S, Se, Ti, and Al are sometimes added in the steelmaking stage for texture control and inhibitor control for stabilizing secondary recrystallization, but are also elements degrading the iron loss property of the final product, so have to be reduced in the decarburization annealing and in the final annealing etc. of the production process. For this reason, the contents of these elements are, in the final product, 0.005% or less, preferably 0.003% or less.

Here, the reasons for selection of the preferable steel composition of the grain-oriented electrical steel sheet are as follows:
Si, if the content is increased, results in a higher electrical resistance and an improved iron loss property. However, if added over 7%, cold rolling becomes extremely difficult in the production process. The sheet will end up cracking at the time of rolling and otherwise will be unsuitable for industrial production. Further, if the content is smaller than 0.8%, if the temperature is raised too high at the time of annealing, γ-transformation will occur, and the crystal orientation of the steel sheet will end up being impaired, so 0.8% or more is preferable.

Mn is an element effective for raising the specific resistance to lower the iron loss. Further, Mn is an element effective for preventing cracks in hot rolling in the production process, but if the content exceeds 1%, the magnetic flux density of the product will end up falling, so the upper limit in the case of inclusion is made 1%.

Cr is also an element effective for raising the specific resistance to lower the iron loss. Furthermore, Cr is an element which improves the surface oxide layer after decarburization annealing in the production process and is effective for formation of a glass film. It may be included in a range of 0.3% or less.

Cu is also an element effective for raising the specific resistance to lower the iron loss, but if the content is over 0.4%, the iron loss reducing effect ends up becoming saturated. In the production process, this becomes a cause of the surface defect of scabs at the time of hot rolling, so the upper limit when including it is made 0.4%.

P is also an element effective for raising the specific resistance to lower the iron loss, but if the content is over 0.5%, problems arise in the rollability of the steel sheet in the production process, so the upper limit in the case of inclusion is made 0.5%.

Ni is also an element effective for raising the specific resistance to lower the iron loss. Further, Ni is an element effective in controlling the metal structure of the hot rolled sheet to improve the magnetic properties, but if the content is over 1%, the secondary recrystallization becomes unstable, so the upper limit in the case of inclusion is made 1%.

Mo is also an element effective for raising the specific resistance to lower the iron loss, but if the content is over 0.1%, problems arise in the rollability of the steel sheet in the production process, so the upper limit in the case of inclusion is made 0.1%.

Sn and Sb are elements which are effective for stabilizing the secondary recrystallization and promoting the {110}<001> orientation, but if over 0.3%, have detrimental effects on the formation of the glass film in the production process, so the upper limit in the case of inclusion is made 0.3%.

Next, examples of the present invention will be explained. The conditions employed in the examples are illustrations of conditions for confirming the workability and advantageous effects of the present invention. The present invention is not limited to these examples.

### Examples

### (Example 1: Single Surface/ Both Surfaces Coating)

For the samples, a 0.07 mm thick grain-oriented electrical steel sheet containing Si: 3%, Mn: 0.1%, Cr: 0.12%, and P: 0.03% and having a mainly {110}<001> orientation was used. One surface or both surfaces of this steel sheet were plated to give Fe-78%Ni alloy magnetic coating of a thickness of 0.6 µm. Next, a tension coating mainly comprised of colloidal silica, aluminum phosphate, and chromic acid was applied. The magnetic properties of the samples after coating are shown in Table 1.

As clear from Table 1, by giving Fe-78%Ni alloy film, the iron loss is improved, and by applying it to one surface results in a larger effect of improvement of iron loss than both surfaces.

**Table 1**

| Sample | Magnetic coating | iron loss W17/50 (W/kg) | Remarks |
|---|---|---|---|
| (A) | One surface | 0.26 | Inv. ex. |
| (B) | Both surfaces | 0.28 | Inv. ex. |
| (C) | None | 0.30 | Comp. ex. |

### (Example 2: B8 Effect)

For the samples, 0.22 mm thick grain-oriented electrical steel sheets of B8/Bs=0.91 to 0.97 containing Si:3.3% and having a mainly {110}<001> orientation were used. One surface of each steel sheet was plated to give Fe-78%Ni alloy magnetic coating of a thickness of 0.6 µm. Next, a tension coating similar to Example 1 was applied. The improvements in the iron loss of the samples before and after coating are shown in Table 2.

As clear from Table 2, when the orientation (B8/Bs) of the grain-oriented electrical steel sheet is 0.93 or more, preferably 0.95 or more, the effect of improvement of the iron loss becomes remarkable.

**Table 2**

| Sample | Magnetic flux density B8 (T) | Orientation B8/Bs | iron loss improvement ΔW17/50 (W/kg) |
|---|---|---|---|
| (D) | 1.958 | 0.97 | 0.06 |
| (E) | 1.924 | 0.95 | 0.03 |
| (F) | 1.882 | 0.93 | 0.01 |
| (G) | 1.958 | 0.92 | 0.003 |

### (Example 3: Ni-Fe Composition)

For the samples, a 0.22 mm thick grain-oriented electrical steel sheet of B8/Bs=0.96 containing Si:3.3% and having a mainly {110}<001> orientation was used. One surface of the steel sheet was plated to give Fe-Ni alloy film changed in Ni content in the range of 40 to 95% and form a coating of 0.6 µm thickness. Next, an insulation coating was applied. The improvements in the iron loss of the samples before and after coating are shown in Table 3.

As clear from Table 3, in the range of Ni content of 50 to 90%, preferably 70 to 85%, the effect of improvement of the iron loss becomes remarkable.

**Table 3**

| Sample | Composition (Ni ratio) (mass%) | iron loss improvement ΔW17/50 (W/kg) |
|---|---|---|
| (H) | 42 | -0.03 |
| (I) | 53 | 0.01 |
| (J) | 71 | 0.03 |
| (K) | 78 | 0.05 |
| (L) | 85 | 0.03 |
| (M) | 90 | 0.01 |
| (N) | 94 | -0.02 |

### (Example 4: Effects of Annealing)

The sample of Example 1 was used. This sample was worked, then treated by stress-relieving annealing at 750° for 2 hours. The sample after annealing had the iron loss W17/50 of 0.26W/kg.

As a result, it was confirmed that even if annealing after core formation, the iron loss reducing effect is not lost.

### (Example 5: Steel Sheet Ingredients)

For the samples, (A) 0.14 mm thick grain-oriented electrical steel sheet containing Si: 3.3%, Mn: 0.1%, Cr: 0.12%, Cu: 0.2%, P: 0.03%, and Sn: 0.06% and having a mainly {110}<001> orientation, (B) 0.14 mm thick grain-oriented electrical steel sheet containing Si: 3.3%, Mn: 0.12%, Ni: 0.1%, P: 0.02%, and Sb: 0.03% and having a mainly {110}<001> orientation, and (C) 0.14 mm thick grain-oriented electrical steel sheet containing Si: 3.3%, Mn: 0.14%, Cr: 0.12%, P: 0.03%, and Mo: 0.01% and having a mainly {110}<001> orientation were coated with Fe-78%Ni alloy film on one side to 0.6 µm, then given a tension coating mainly comprised of colloidal silica, aluminum phosphate, and chromic acid. The iron loss improvement before and after magnetic coating is shown in Table 4.

In each sample of the different ingredients, a iron loss reducing effect is obtained.

**Table 4**

| Sample | iron loss improvement ΔW17/50 (W/kg) | Remarks |
|---|---|---|
| (A) | 0.03 | Inv. ex. |
| (B) | 0.05 | Inv. ex. |
| (C) | 0.04 | Inv. ex. |

According to the present invention, it is possible to control the magnetic domains by a method where the effect of improvement of the iron loss is not lost and a drastic drop in the magnetic flux density is not caused even if annealing after core formation.

Therefore, it is possible to easily obtain grain-oriented electrical steel sheet excellent in magnetic properties with a low iron loss and a high magnetic flux density and provide grain-oriented electrical steel sheet meeting recent demands for environmental protection and energy saving, so the present invention has great industrial applicability.

## Claims

1. Grain-oriented electrical steel sheet excellent in magnetic properties having {110}<001> orientation texture **characterized in that** the steel contains Si in 0.8 to 7 mass%, optionally one or more of Mn: 1% or less, Cr: 0.3% or less, Cu: 0.4% or less, P: 0.5% or less, Ni: 1% or less, Mo: 0.1% or less, Sn: 0.3% or less, and Sb: 0.3% or less, further optionally C, N, S, Se, Ti and Al, the contents of these elements being 0.005% or less, and a balance of Fe and unavoidable impurities, and that at least one surface of the steel sheet is formed from a Ni-Fe alloy film consisting of a composition of Fe: 10 to 30 mass% and Ni: 90 to 70 mass%, wherein the thickness of the Ni-Fe alloy film is 0.1 to 0.6 µm; wherein
at least one surface of the steel sheet is formed from a tension coating on the surface of the Ni-Fe alloy film and **in that** the roughness of the interface between the Ni-Fe alloy film and the tension coating is not more than the roughness of the interface between the Ni-Fe alloy film and the base iron.

2. Grain-oriented electrical steel sheet excellent in magnetic properties as set forth in claim 1, **characterized in that** the surface of the Ni-Fe alloy film is formed from a 0.1 to 1 kg/mm² tension coating.

3. Grain-oriented electrical steel sheet excellent in magnetic properties as set forth in claim 1, **characterized in that** the ratio B8/Bs of magnetic flux density B8 of the steel sheet and saturated magnetic flux density Bs of the steel sheet is 0.93 or more.

## Patentansprüche

1. Kornorientiertes Elektrostahlblech mit hervorragenden magnetischen Eigenschaften, das eine {110}<001> Orientierungstextur aufweist, **dadurch gekennzeichnet, dass** der Stahl Si in 0,8 bis 7 Massen%, gegebenenfalls eines oder mehrere aus Mn: 1% oder weniger, Cr: 0,3% oder weniger, Cu: 0,4% oder weniger, P: 0,5% oder weniger, Ni: 1% oder weniger, Mo: 0,1% oder weniger, Sn: 0,3% oder weniger und Sb: 0,3% oder weniger, ferner gegebenenfalls C, N, S, Se, Ti und Al, wobei die Gehalte dieser Elemente 0,005% oder weniger betragen und einen Rest aus Fe und unvermeidbaren Verunreinigungen enthält und dass mindestens eine Oberfläche des Stahlblechs aus einem Ni-Fe-Legierungsfilm, bestehend aus einer Zusammensetzung aus Fe: 10 bis 30 Massen% und Ni: 90 bis 70 Massen%, besteht, wobei die Dicke des Ni-Fe-Legierungsfilms 0,1 bis 0,6 µm beträgt; wobei
mindestens eine Oberfläche des Stahlblechs aus einer Spannungsbeschichtung auf der Oberfläche des Ni-Fe-Legierungsfilms gebildet ist und dadurch, dass die Rauheit der Grenzfläche zwischen dem Ni-Fe-Legierungsfilm und der Spannungsbeschichtung nicht mehr als die Rauheit der Grenzfläche zwischen dem Ni-Fe-Legierungsfilm und dem Basiseisen beträgt.

2. Kornorientiertes Elektrostahlblech mit hervorragenden magnetischen Eigenschaften wie in Anspruch 1 dargelegt, **dadurch gekennzeichnet, dass** die Oberfläche des Ni-Fe-Legierungsfilms aus einer Spannungsbeschichtung mit 0,1 bis 1 kg/mm² gebildet ist.

3. Kornorientiertes Elektrostahlblech mit hervorragenden magnetischen Eigenschaften wie in Anspruch 1 dargelegt, **dadurch gekennzeichnet dass** das Verhältnis B8/Bs der magnetischen Flussdichte B8 des Stahlblechs und der gesättigten magnetischen Flussdichte Bs des Stahlblechs 0,93 oder mehr beträgt.

## Revendications

1. Tôle d'acier électrique à grains orientés d'excellentes propriétés magnétiques ayant une texture d'orientation {110}<001> **caractérisée en ce que** l'acier contient Si dans de 0,8 à 7 % en masse, éventuellement un ou plusieurs de Mn : 1 % ou inférieur, Cr : 0,3 % ou inférieur, Cu : 0,4 % ou inférieur, P : 0,5 % ou inférieur, Ni : 1 % ou inférieur, Mo : 0,1 % ou inférieur, Sn : 0,3 % ou inférieur, et Sb : 0,3 % ou inférieur, de plus éventuellement C, N, S, Se, Ti et Al, les teneurs de ces éléments étant de 0,005 % ou inférieures, et un reste de Fe et d'impuretés inévitables, et **en ce qu'**au moins une surface de la tôle d'acier est formée d'un film d'alliage de Ni-Fe consistant en une composition de Fe : 10 à 30 % en masse et Ni : 90 à 70 % en masse, où l'épaisseur du film d'alliage de Ni-Fe est de 0,1 à 0,6 µm ; où
au moins une surface de la tôle d'acier est formée à partir d'un revêtement de tension sur la surface du film d'alliage de Ni-Fe et **en ce que** la rugosité de l'interface entre le film d'alliage de Ni-Fe et le revêtement de tension n'est pas supérieure à la rugosité de l'interface entre le film d'alliage de Ni-Fe et le fer de base.

2. Tôle d'acier électrique à grains orientés d'excellentes propriétés magnétiques selon la revendication 1, **caractérisée en ce que** la surface du film d'alliage de Ni-Fe est formée d'un revêtement de tension de 0,1 à 1 kg/mm².

3. Tôle d'acier électrique à grains orientés d'excellentes propriétés magnétiques selon la revendication 1, **caractérisée en ce que** le rapport B8/Bs de densité de flux magnétique B8 de la tôle d'acier et de densité de flux magnétique saturée Bs de la tôle d'acier est de 0,93 ou supérieur.
